# EUROPÄISCHE PATENTSCHRIFT

(11) **EP 3 601 822 B1**
(45) Veröffentlichungstag und Bekanntmachung des Hinweises auf die Patenterteilung: **20.04.2022**
(21) Anmeldenummer: 19727641.3
(22) Anmeldetag: 28.05.2019
(51) Int. Cl.: B05D 5/08, B05D 1/28, B05C 1/02, B05C 1/08, F16C 9/02, F16C 33/20, B05D 7/14

(54) **VERFAHREN ZUM HERSTELLEN EINES AXIALGLEITLAGERELEMENTS**
METHOD FOR PRODUCING AN AXIAL SLIDING BEARING
PROCÉDÉ POUR LA FABRICATION D'UN ÉLÉMENT DE PALIER COULISSANT AXIAL

(30) Priorität: 19.06.2018 DE 102018114696
(43) Veröffentlichungstag der Anmeldung: 05.02.2020
(73) Patentinhaber: KS Gleitlager GmbH, 68789 St. Leon-Rot (DE)
(72) Erfinder: BUERKLE, Gunter, 71726 Benningen (DE); DRAFZ, Rebekka, 51377 Leverkusen (DE)
(74) Vertreter: DREISS Patentanwälte PartG mbB
(86) Internationale Anmeldenummer: PCT/EP2019/063780
(87) Internationale Veröffentlichungsnummer: WO 2019/243005

(56) Entgegenhaltungen:
- DE-A1- 3 429 049
- DE-A1-102008 026 519
- DE-A1-102013 203 842
- US-A1- 2014 233 875

## Beschreibung

Die Erfindung betrifft ein Verfahren zum Herstellen eines Axialgleitlagerelements, insbesondere einer Anlaufscheibe bei einer Kurbelwelle eines Verbrennungsmotors, mit einer Stützschicht, insbesondere aus Stahl, und einer darauf aufgebrachten Lagermetallschicht aus Bronze, Messing oder Aluminiumlegierung, und einer darauf aufgebrachten Gleitlackschicht auf Polymerbasis, gegebenenfalls mit die tribologischen Eigenschaften verbessernden Füllstoffen, wobei ein die Stützschicht und die Lagermetallschicht umfassender Verbundwerkstoff als metallisches Flachmaterial bereitgestellt wird und wobei aus diesem Flachmaterial ein der Geometrie des herzustellenden Axialgleitlagers entsprechender Platinenabschnitt ausgestanzt wird, und wobei dieser Platinenabschnitt zur Bildung der Gleitlackschicht mit Gleitlack beschichtet wird.

Gemäß bekannten Verfahren wurde eine Gleitlackschicht bei hier in Rede stehenden Axialgleitlagerelementen beispielsweise durch Sprühen des Gleitlacks aufgebracht und hergestellt. Um auch am Rand eine hinreichende Dicke der Gleitlackschicht zu erzielen, muss man bewusst über den Rand hinaus sprühen. Hierbei rinnt dann aber Gleitlack typischerweise der Schwerkraft folgend an seitlichen Randflächen des Platinenabschnitts nach unten, was natürlich unerwünscht ist. Um dies zu vermeiden, wurde bereits vorgeschlagen, Gleitlack im Siebdruckverfahren über eine Schablone auf einen betreffenden Platinenabschnitt aufzubringen. Dabei überlappt die Schablone Randbereiche des Platinenabschnitts derart, dass nicht eine gesamte Oberfläche, also bis zu den geometrischen Rändern des Platinenabschnitts, beschichtet werden kann, was ebenfalls als nachteilig angesehen wird.

DE 10 2008 026 519 A1 offenbart ein nicht näher spezifiziertes Gleitlagerelement mit dem grundsätzlichen Aufbau einer Stützschicht, einer metallischen Lagermetallschicht aus einer Aluminiumlegierung und einer darauf aufgebrachten Gleitlackschicht auf einer Polymerbasis. Zur Herstellung der Polymerschicht wird ein Sprühverfahren zusammen mit einem optionalen Walzenbeschichten vorgeschlagen.

US 2014/233875 A1 offenbart ein radiales Gleitlagerelement wiederum mit einer Stützschicht, einer Lagermetallschicht aus Aluminiumlegierung und einer darauf aufgebrachten Gleitlackschicht auf einer Polymerbasis. Die Gleitlackschicht wird durch ein spezielles Walzendruckverfahren auf eine Halbschalenform eines Verbunds aus Stützschicht und Lagermetallschicht aufgebracht. Es werden im Detail Vorteile des Verfahrens gegenüber einem Aufsprühen auf eine Halbschalenform erörtert.

DE 10 2013 203 842 A1 offenbart ein Axialgleitlagerelement, welches mit einem Gleitlack auf Polymerbasis beschichtet ist. Das Lager weist keine auf einer Stützschicht aufgebrachte Lagermetallschicht auf. Es werden keine Verfahrensschritte bezüglich eines möglichen Herstellungsverfahrens offenbart.

DE 34 29 049 A1 offenbart ein Walzendruckverfahren als solches zur Beschichtung planer Werkstücke, beispielsweise zum Beschichten von Möbelwerkstücken mit Leim, Lack, Spachtel, Farbe oder dergleichen, wobei eine Auftragswalze gegen das zu beschichtende Werkstück abrollt und dabei den Werkstoff aufbringt. Zur Werkstoffdosierung rollt eine Dosierwalze gegen die Auftragswalze ab, wobei oberhalb des entstehenden Walzenspalts zwischen Auftragswalze und Dosierwalze der fließfähige Werkstoff aufgenommen wird. Die Auftragsqualität wird im Sinne einer gleichmäßigen Beschichtung bezüglich der Auftragsmenge hervorgehoben. Es werden jedoch keine Angaben bezüglich einer Schichtdicke im Randbereich der beschichteten Werkstücke gemacht.

Der vorliegenden Erfindung liegt die Aufgabe zugrunde, ein Verfahren bereitzustellen, mit dem eine qualitativ hochwertige Beschichtung eines Platinenabschnitts mit Gleitlack realisiert werden kann, wobei das Verfahren auf wirtschaftliche Weise ausführbar sein soll, ohne dass es zu den vorausgehend genannten Nachteilen kommt.

Diese Aufgabe wird erfindungsgemäß durch ein Verfahren der genannten Art gelöst, das dadurch gekennzeichnet ist, dass der Gleitlack in einem Walzendruckverfahren unter Verwendung einer gegen den Platinenabschnitt abrollenden Auftragswalze auf den Platinenabschnitt aufgebracht wird und dass zum Aufbringen von Gleitlack auf die Auftragswalze eine Dosierwalze gegen die Auftragswalze abgerollt wird und in einen hierdurch gebildeten Walzenspalt der Gleitlack eingegeben wird, und dass beim Abrollen der Auftragswalze gegen den Platinenabschnitt eine Beschichtung des Platinenabschnitts bis zu einem bezüglich der Walzrichtung vorderen und hinteren Rand und bis zu beidseitigen Rändern des Platinenabschnitts erzielt wird. Durch die Verwendung der beanspruchten Auftragswalze und Dosierwalze lässt sich auf der Oberfläche der Auftragswalze ein sehr genau einstellbarer Gleitlackfilm mit gleichmäßiger Dicke ausbilden, der durch Abrollen der Auftragswalze gegenüber dem Platinenabschnitt eine gleichmäßige Gleitlackmenge an den Platinenabschnitt abgibt. Dadurch, dass die Auftragswalze gegenüber dem Platinenabschnitt abrollt, kann die gesamte zur Auftragswalze exponierte Flachseite des Platinenabschnitts, also dessen gesamte Lagermetallschicht bis zu den Rändern, mit Gleitlack beschichtet werden, und zwar ohne dass überschüssiger Gleitlack an den Seitenflanken des Platinenabschnitts herunterrinnt und den Platinenabschnitt und die Unterlage verunreinigt.

Es erweist sich als vorteilhaft, wenn die Auftragswalze ortsfest, jedoch rotierend antreibbar vorgesehen wird und wenn der Platinenabschnitt mittels einer Förder- und Zuführeinrichtung translatorisch und tangential an die Auftragswalze herangeführt und daran vorbeigeführt wird, so dass die Auftragswalze gegen den Platinenabschnitt abrollen kann. Hierfür wird der Platinenabschnitt bzw. eine Vielzahl von Platinenabschnitten auf einem Förderband als Förder- und Zuführeinrichtung mit einer genau einstellbaren Transportgeschwindigkeit transportiert. Im Bereich des Abrollens der Auftragswalze gegenüber dem jeweiligen Platinenabschnitt wird die Förder- und Zuführeinrichtung durch geeignete von unten wirkende Stützmittel gewissermaßen als Gegenlager gestützt, so dass im Bereich der Berührung von Auftragswalze und Platinenabschnitt genaue Parameter wie Größe eines Walzenspalts, Anpressdruck vorgegeben werden können.

Vorzugsweise weist die Auftragswalze eine Oberfläche aus einem lösemittelbeständigen, insbesondere NEP-beständigen Polymermaterial auf.

Die Oberfläche kann vorzugsweise eine Rauigkeit von Rz = 15-50 pm, insbesondere von 20-40 µm aufweisen.

Es erweist sich weiter als vorteilhaft, wenn die Auftragswalze eine geringfügig nachgiebige Oberfläche aufweist, indem die Oberfläche der Auftragswalze eine Shore-Härte von wenigstens 35, insbesondere von wenigstens 40, insbesondere von wenigstens 45 und von höchstens 65, insbesondere von höchstens 60, insbesondere von höchstens 55 aufweist.

Es erweist sich weiter als vorteilhaft, wenn der Durchmesser der Auftragswalze größer ist als der Durchmesser der Dosierwalze.

Hierbei erweist es sich als vorteilhaft, wenn der Durchmesser der Auftragswalze 100 - 250 mm, insbesondere 100 - 200 mm, insbesondere 100 - 150 mm beträgt und/oder wenn der Durchmesser der Dosierwalze 50 - 150 cm, insbesondere 80 - 120 mm beträgt.

Es erweist sich weiter als vorteilhaft, wenn die Dosierwalze eine Oberfläche aus Metall, insbesondere aus poliertem Stahl, aufweist.

Es erweist sich Prozess technisch weiter als vorteilhaft, wenn der Durchmesser der Auftragswalze das 1,5-fache bis 4,0-fache, insbesondere das 2,0-fache bis 3,0-fache einer größten Abmessung des zu beschichtenden Platinenabschnitts beträgt.

Durch Einstellung der vorausgehend erörterten Parameter ist es denkbar, dass der Gleitlack zur Ausbildung der Gleitlackschicht in einem einzigen Auftragsschritt durch Abrollen der Auftragswalze gegen den Platinenabschnitt aufgebracht wird. Um eine Schichtdicke im Bereich von wenigstens 5 pm, insbesondere wenigstens 8 µm und vorzugsweise höchstens 15 pm, insbesondere höchstens 12 µm und insbesondere im Bereich von ca. 10 µm zu erzeugen, erweist es sich weiter als vorteilhaft, wenn der Gleitlack in zwei aufeinanderfolgenden Anordnungen aus Dosierwalze und Auftragswalze aufgebracht wird. Es können so zwei Gleitlackbeschichtungen aufeinanderfolgend aufgebracht werden. Der räumliche und zeitliche Abstand der beiden Auftragsanordnungen ist dabei derart, dass beim Aufbringen mittels der nachfolgenden Anordnung der Gleitlack aus der ersten Anordnung noch nicht ausgehärtet ist.

In Weiterbildung dieses Gedankens wird weiter vorgeschlagen, dass die Auftragswalze der nachfolgenden zweiten Anordnung aus Dosierwalze und Auftragswalze mit einer Umfangsgeschwindigkeit angetrieben wird, die kleiner ist als eine Transportgeschwindigkeit des Platinenabschnitts. Dies bedeutet, dass die Auftragswalze gegenüber dem Platinenabschnitt nicht schlupffrei abrollt, sondern sich der Platinenabschnitt schneller bewegt. Auf diese Weise übt die nachgeordnete Auftragswalze eine Rakelfunktion beim Farbauftrag auf den Platinenabschnitt aus. Auch wird der zweimalige Lackauftrag inniger miteinander verbunden.

Insbesondere kann vorgesehen sein, dass die Auftragswalze der ersten Anordnung aus Dosierwalze und Auftragswalze mit einer Umfangsgeschwindigkeit angetrieben wird, die der Transportgeschwindigkeit des Platinenabschnitts entspricht, so dass sie schlupffrei dagegen abrollt, und dass die Auftragswalze der nachfolgenden zweiten Anordnung aus Dosierwalze und Auftragswalze mit einer Umfangsgeschwindigkeit angetrieben wird, die kleiner ist als die Umfangsgeschwindigkeit der Auftragswalze der ersten Anordnung und kleiner als die Transportgeschwindigkeit des Platinenabschnitts, so dass mittels der Auftragswalze der zweiten Anordnung eine Rakelfunktion ausgeübt wird.

Es erweist sich weiter als vorteilhaft, dass die Auftragswalze der zweiten Anordnung mit einer Umfangsgeschwindigkeit angetrieben wird, die zwischen dem 0,25- und 0,8-fachen, insbesondere zwischen dem 0,3- und 0,5-fachen der Transportgeschwindigkeit des Platinenabschnitts liegt. Die Umfangsgeschwindigkeit der Auftragswalze der ersten Anordnung beträgt vorzugsweise zwischen 2,0 und 5,0 m/min, besondere zwischen 3,0 und 4,0 m/min.

Ungeachtet des vorstehenden Gesichtspunkts erweist es sich als besonders vorteilhaft, dass unter Anwendung des erfindungsgemäßen Verfahrens auch eine im Wesentlichen gleichmäßige Beschichtungsdicke mit Gleitlack erzielt wird. Es erweist sich als vorteilhaft, dass ausgehend von Rändern des Platinenabschnitts eine Beschichtungsdicke mit Gleitlack erzielt wird, die innerhalb eines Randbereichs von 1 mm orthogonal zur Walzrichtung bzw. in oder entgegengesetzt der Walzrichtung wenigstens 90 % einer Nennschichtdicke erreicht.

Gegenstand der Erfindung ist auch ein Gleitlagerelement gemäß Anspruch 14.

Weitere Einzelheiten, Merkmale und Vorteile der Erfindung ergeben sich aus den beigefügten Patentansprüchen und der zeichnerischen Darstellung und nachfolgenden Beschreibung einer bevorzugten Ausführungsform der Erfindung.

In der Zeichnung zeigt:
Figur 1 eine schematische Darstellung einer Beschichtungsanordnung zur Ausführung des erfindungsgemäßen Verfahrens; und
Figur 2 eine schematische Darstellung eines beschichteten ebenen Platinenabschnitts.

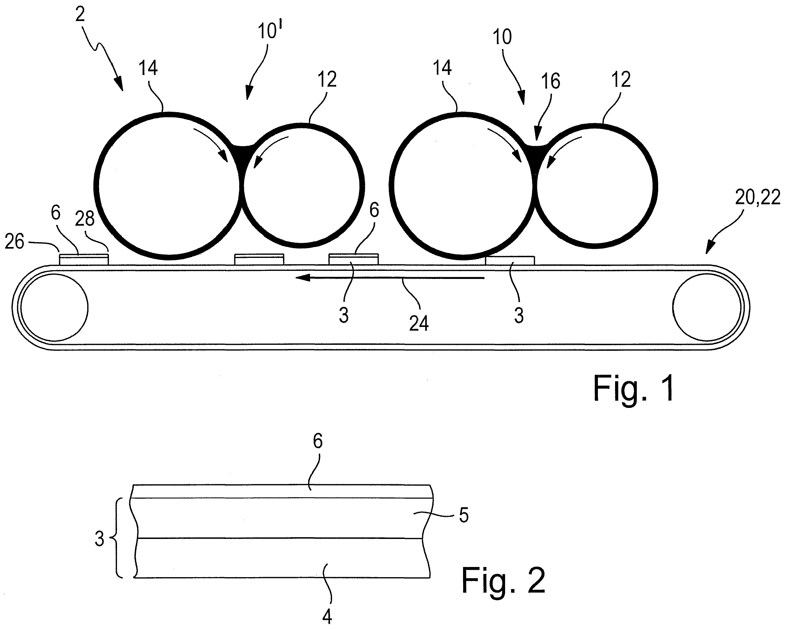

Die Figur 1 zeigt eine insgesamt mit dem Bezugszeichen 2 bezeichnete Anordnung zum Beschichten von ebenen Platinenabschnitten 3 mit Gleitlack bei der Herstellung von Axialgleitlagerelementen. Bei den Platinenabschnitten 3 handelt es sich um Abschnitte, insbesondere Stanzlinge, eines Verbundwerkstoffs umfassend eine Stützschicht 4, insbesondere Stahl, und eine darauf aufgebrachte Lagermetallschicht 5 aus Bronze, Messing oder Aluminiumlegierung. Diese Platinenabschnitte werden in der Beschichtungsanordnung 2 mit Gleitlack beschichtet, so dass eine Gleitlackschicht 6 gebildet wird, welche die dem Gleitpartner zugewandte Schicht des Axialgleitlagerelements bildet.

Hierfür umfasst die Auftragsvorrichtung 2 beispielhaft zwei aufeinanderfolgende Anordnungen 10, 10' aus je einer Dosierwalze 12 und einer Auftragswalze 14. Die Dosierwalze 12 und die Auftragswalze 14 rollen gegeneinander ab und bilden so einen sich verjüngenden Walzenspalt 16, in den Gleitlack eingegeben wird. Vorzugsweise umfasst die Dosierwalze 12 eine Oberfläche aus Stahl und die Auftragswalze 14 eine Oberfläche aus einem Polymermaterial, die geringfügig nachgiebig ist. Durch Einstellen einer Andruckkraft zwischen den Walzen 12, 14 lässt sich somit eine wohldefinierte Menge Gleitlack oder Gleitlackfilmdicke bei der Auftragswalze 14 erzielen. Des Weiteren umfasst die Einrichtung 2 eine Förder- und Zuführeinrichtung 20, die hier beispielhaft in Form eines umlaufenden Förderbands 22 schematisch dargestellt ist. Auf deren Transportfläche werden die zu beschichtenden Platinenabschnitte 3 in Transport- oder Zuführrichtung 24 aufeinanderfolgend und gegebenenfalls auch nebeneinander aufgegeben und mit einer definierten Transportgeschwindigkeit v der jeweiligen Auftragswalze 14 der Anordnungen 10, 10' zugeführt. Die Anordnungen 10, 10' sind so ausgebildet und angeordnet, dass die jeweilige Auftragswalze 14 gegenüber der zu beschichtenden Oberfläche der Platinenabschnitte 3 abrollt. Dabei rollt die erste Auftragswalze vorzugsweise schlupffrei gegenüber den betreffenden Platinenabschnitten 4 ab. Die in Transportrichtung nachfolgende Auftragswalze 14 kann dagegen - wie vorausgehend geschildert - mit einer kleineren Umfangsgeschwindigkeit, also mithin schlupfbehaftet, gegenüber den Platinenabschnitten 4 abrollen.

Im Ergebnis wird eine gleichmäßige Beschichtung der Platinenabschnitte 3 mit Gleitlack 6 erzielt, wobei die Beschichtung bis zu einem bezüglich der Walz- oder Auftragsrichtung vorderen und hinteren Rand 26, 28 und bis zu beidseitigen seitlichen Rändern des jeweiligen Platinenabschnitts 3 erfolgt. Es bleibt also kein Randbereich der zu beschichtenden Oberseite der Platinenabschnitte 3 unbeschichtet. Ausgehend von beidseitigen Rändern und ausgehend von dem vorderen und hinteren Rand 26, 28 des jeweiligen Platinenabschnitts 3 erreicht die Beschichtungsdicke mit Gleitlack innerhalb eines Randbereichs von 1 mm orthogonal zur Walzrichtung bzw. in der Walzrichtung wenigstens 90% einer Nennschichtdicke der Gleitlackbeschichtung. Die Nennschichtdicke ist diejenige Dicke, die in einem von den Rändern mehr als 2 mm beabstandeten Bereich des Gleitlagerelements gebildet ist.

## Patentansprüche

1. Verfahren zum Herstellen eines Axialgleitlagerelements, insbesondere einer Anlaufscheibe bei einer Kurbelwelle eines Verbrennungsmotors, mit einer Stützschicht, insbesondere aus Stahl, und einer darauf aufgebrachten Lagermetallschicht aus Bronze, Messing oder Aluminiumlegierung, und einer darauf aufgebrachten Gleitlackschicht (6) auf Polymerbasis, gegebenenfalls mit die tribologischen Eigenschaften verbessernden Füllstoffen, wobei ein die Stützschicht und die Lagermetallschicht umfassender Verbundwerkstoff als metallisches Flachmaterial bereitgestellt wird und wobei aus diesem Flachmaterial ein der Geometrie des herzustellenden Axialgleitlagers entsprechender Platinenabschnitt (3) ausgestanzt wird, und wobei dieser Platinenabschnitt (3) zur Bildung der Gleitlackschicht (6) mit Gleitlack beschichtet wird, **dadurch gekennzeichnet, dass** der Gleitlack in einem Walzendruckverfahren unter Verwendung einer gegen den Platinenabschnitt (3) abrollenden Auftragswalze (14) auf den Platinenabschnitt (3) aufgebracht wird und dass zum Aufbringen von Gleitlack auf die Auftragswalze (14) eine Dosierwalze (12) gegen die Auftragswalze (14) abgerollt wird und in einen hierdurch gebildeten Walzenspalt der Gleitlack eingegeben wird, und dass beim Abrollen der Auftragswalze (14) gegen den Platinenabschnitt (3) eine Beschichtung des Platinenabschnitts bis zu einem bezüglich der Walzrichtung vorderen und hinteren Rand (26, 28) und bis zu beidseitigen Rändern des Platinenabschnitts (4) erzielt wird.

2. Verfahren nach Anspruch 1, **dadurch gekennzeichnet, dass** die Auftragswalze (14) ortsfest, jedoch rotierend antreibbar vorgesehen wird und dass der Platinenabschnitt (3) mittels einer Förder- und Zuführeinrichtung (20) translatorisch und tangential an die Auftragswalze (14) herangeführt und daran vorbeigeführt wird, so dass die Auftragswalze (14) gegen den Platinenabschnitt (4) abrollen kann.

3. Verfahren nach Anspruch 1, oder 2, **dadurch gekennzeichnet, dass** die Auftragswalze (14) eine Oberfläche aus einem lösemittelbeständigen, insbesondere NEP-beständigen Polymermaterial aufweist.

4. Verfahren nach einem oder mehreren der vorstehenden Ansprüche, **dadurch gekennzeichnet, dass** eine Oberfläche der Auftragswalze (14) eine Rauigkeit von Rz = 15-50 µm, insbesondere von 20-40 µm aufweist.

5. Verfahren nach einem oder mehreren der vorstehenden Ansprüche, **dadurch gekennzeichnet, dass** die Auftragswalze (14) eine geringfügig nachgiebige Oberfläche aufweist, indem die Oberfläche der Auftragswalze (14) eine Shore-Härte von wenigstens 35, insbesondere von wenigstens 40, insbesondere von wenigstens 45 und von höchstens 65, insbesondere von höchstens 60, insbesondere von höchstens 55 aufweist.

6. Verfahren nach einem oder mehreren der vorstehenden Ansprüche, **dadurch gekennzeichnet, dass** der Durchmesser der Auftragswalze (14) größer ist als der Durchmesser der Dosierwalze (12).

7. Verfahren nach einem oder mehreren der vorstehenden Ansprüche, **dadurch gekennzeichnet, dass** der Durchmesser der Auftragswalze (14) 100 - 250 mm, insbesondere 100 - 200 mm, insbesondere 100 - 150 mm beträgt und/oder dass der Durchmesser der Dosierwalze 50 - 150 cm, insbesondere 80 - 120 mm beträgt.

8. Verfahren nach einem oder mehreren der vorstehenden Ansprüche, **dadurch gekennzeichnet, dass** die Dosierwalze (12) eine Oberfläche aus Metall, insbesondere aus poliertem Stahl, aufweist.

9. Verfahren nach einem oder mehreren der vorstehenden Ansprüche, **dadurch gekennzeichnet, dass** der Durchmesser der Auftragswalze (14) das 1,5-fache bis 4,0-fache, insbesondere das 2,0-fache bis 3,0-fache einer größten Abmessung des zu beschichtenden Platinenabschnitts (3) beträgt.

10. Verfahren nach einem oder mehreren der vorstehenden Ansprüche, **dadurch gekennzeichnet, dass** der Gleitlack in zwei aufeinander folgenden Anordnungen (10, 10') jeweils aus Dosierwalze (12) und Auftragswalze (14) aufgebracht wird.

11. Verfahren nach Anspruch 9, **dadurch gekennzeichnet, dass** die Auftragswalze (14) der nachfolgenden zweiten Anordnung (10') aus Dosierwalze (12) und Auftragswalze (14) mit einer Umfangsgeschwindigkeit angetrieben wird, die kleiner ist als eine Transportgeschwindigkeit des Platinenabschnitts (3).

12. Verfahren nach Anspruch 9 und 10, **dadurch gekennzeichnet, dass** die Auftragswalze (14) der ersten Anordnung (10) aus Dosierwalze (12) und Auftragswalze (14) mit einer Umfangsgeschwindigkeit angetrieben wird, die der Transportgeschwindigkeit des Platinenabschnitts (3) entspricht, so dass sie schlupffrei dagegen abrollt, und dass die Auftragswalze (14) der nachfolgenden zweiten Anordnung (10') aus Dosierwalze (12) und Auftragswalze (14) mit einer Umfangsgeschwindigkeit angetrieben wird, die kleiner ist als die Umfangsgeschwindigkeit der Auftragswalze (14) der ersten Anordnung (10) und kleiner als die Transportgeschwindigkeit des Platinenabschnitts (4), so dass mittels der Auftragswalze (14) der zweiten Anordnung (10') eine Rakelfunktion ausgeübt wird.

13. Verfahren nach Anspruch 9, 10 und 11, **dadurch gekennzeichnet, dass** die Auftragswalze (14) der zweiten Anordnung (10') mit einer Umfangsgeschwindigkeit angetrieben wird, die zwischen dem 0,25- und 0,8-fachen, insbesondere zwischen dem 0,3- und 0,5-fachen der Transportgeschwindigkeit des Platinenabschnitts (3) beträgt.

14. Verfahren nach einem oder mehreren der vorstehenden Ansprüche, **dadurch gekennzeichnet, dass** ausgehend von Rändern des Platinenabschnitts (4) eine Beschichtungsdicke mit Gleitlack erzielt wird, die innerhalb eines Randbereichs von 1 mm orthogonal zur Walzrichtung und in der Walzrichtung und entgegengesetzt der Walzrichtung wenigstens 90 % einer Nennschichtdicke erreicht.

15. Axialgleitlagerelement, insbesondere Anlaufscheibe bei einer Kurbelwelle eines Verbrennungsmotors, mit einer Stützschicht (4), insbesondere aus Stahl, und einer darauf aufgebrachten Lagermetallschicht (5) aus Bronze, Messing oder Aluminiumlegierung, und einer darauf aufgebrachten Gleitlackschicht (6) auf Polymerbasis, gegebenenfalls mit die tribologischen Eigenschaften verbessernden Füllstoffen, wobei ein die Stützschicht (4) und die Lagermetallschicht (5) umfassender Verbundwerkstoff als metallisches Flachmaterial bereitgestellt wird und wobei aus diesem Flachmaterial ein der Geometrie des herzustellenden Axialgleitlagers entsprechender Platinenabschnitt (3) ausgestanzt wird, und wobei dieser Platinenabschnitt zu Bildung der Gleitlackschicht (6) mit Gleitlack beschichtet wird, **dadurch gekennzeichnet, dass** das Gleitlagerelement nach einem Verfahren nach einem oder mehreren der vorstehenden Ansprüche hergestellt ist.

## Claims

1. Method for producing an axial sliding bearing element, in particular a thrust washer, in a crankshaft of an internal combustion engine, with a support layer, in particular made of steel, and a bearing metal coating of bronze, brass or aluminium alloy applied thereon, and a polymer-based anti-friction coating layer (6) applied thereon, optionally with fillers improving the tribological properties, wherein a composite material comprising the support layer and the bearing metal coating is provided as a metallic flat material, and wherein a plate section (3) corresponding to the geometry of the axial sliding bearing to be produced is punched out of this flat material, and wherein this plate section (3) is coated with anti-friction coating to form the anti-friction coating layer (6), **characterised in that** the anti-friction coating is applied to the plate section (3) in a roller printing process using an applicator roller (14) rolling off against the plate section (3), and that in order to apply anti-friction coating to the applicator roller (14), a dosing roller (12) is rolled off against the applicator roller (14) and the anti-friction coating is introduced into a roller gap thereby formed, and that, when rolling off the applicator roller (14) against the plate section (3), a coating of the plate section up to a front and rear edge, in relation to the rolling direction (26, 28), and up to edges on each side of the plate section (4) is achieved.

2. Method according to claim 1, **characterised in that** the applicator roller (14) is fixed in position, but driveable in a rotary manner, and that the plate section (3) is brought up to the applicator roller (14), in a translational and tangential manner, by means of a conveying and feeding device (20), and moved past this, so that the applicator roller (14) can roll off against the plate section (4).

3. Method according to claim 1 or 2, **characterised in that** the applicator roller (14) has a surface consisting of a solvent-resistant, in particular NEP-resistant polymer material.

4. Method according to one or more of the preceding claims, **characterised in that** a surface of the applicator roller (14) has a roughness of Rz = 15-50 µm, in particular of 20-40 µm.

5. Method according to one or more of the preceding claims, **characterised in that** the applicator roller (14) has a slightly yielding surface, **in that** the surface of the applicator roller (14) has a Shore hardness of at least 35, in particular of at least 40, in particular of at least 45 and of a maximum of 65, in particular of a maximum of 60, in particular of a maximum of 55.

6. Method according to one or more of the preceding claims, **characterised in that** the diameter of the applicator roller (14) is greater than the diameter of the dosing roller (12).

7. Method according to one or more of the preceding claims, **characterised in that** the diameter of the applicator roller (14) is 100 - 250 mm, in particular 100 - 200 mm, in particular 100 - 150 mm and/or that the diameter of the dosing roller is 50 - 150 mm, in particular 80 - 120 mm.

8. Method according to one or more of the preceding claims, **characterised in that** the dosing roller (12) has a surface of metal, in particular polished steel.

9. Method according to one or more of the preceding claims, **characterised in that** the diameter of the applicator roller (14) is 1.5 times to 4.0 times, in particular 2.0 times to 3.0 times a largest dimension of the plate section to be coated (3).

10. Method according to one or more of the preceding claims, **characterised in that** the anti-friction coating is applied in two successive arrangements (10, 10") each consisting of dosing roller (12) and applicator roller (14).

11. Method according to claim 9, **characterised in that** the applicator roller (14) of the following second arrangement (10') of dosing roller (12) and applicator roller (14) is driven with a circumferential speed which is less than a transport speed of the plate section (3).

12. Method according to claim 9 and 10, **characterised in that** the applicator roller (14) of the first arrangement (10) of dosing roller (12) and applicator roller (14) is driven with a circumferential speed corresponding to the transport speed of the plate section (3), so that it rolls off against this without slippage, and that the applicator roller (14) of the following second arrangement (10') of dosing roller (12) and applicator roller (14) is driven with a circumferential speed which is less than the circumferential speed of the applicator roller (14) of the first arrangement (10) and less than the transport speed of the plate section (4), so that a squeegee function is performed by means of the applicator roller (14) of the second arrangement (10').

13. Method according to claim 9, 10 and 11, **characterised in that** the applicator roller (14) of the second arrangement (10') is driven with a circumferential speed between 0.25 and 0.8 times, in particular between 0.3 and 0.5 times the transport speed of the plate section (3).

14. Method according to one or more of the preceding claims, **characterised in that**, starting out from edges of the plate section (4), a coating thickness with anti-friction coating is achieved which reaches at least 90 % of a nominal layer thickness within an edge region of 1 mm orthogonally to the rolling direction and in the rolling direction and contrary to the rolling direction.

15. Axial sliding bearing element, in particular thrust washer, in a crankshaft of an internal combustion engine, with a support layer (4), in particular made of steel, and a bearing metal coating (5) of bronze, brass or aluminium alloy applied thereon, and a polymer-based anti-friction coating layer (6) applied thereon, optionally with fillers improving the tribological properties, wherein a composite material comprising the support layer (4) and the bearing metal coating (5) is provided as a metallic flat material, and wherein a plate section (3) corresponding to the geometry of the axial sliding bearing to be produced is punched out of this flat material, and wherein this plate section is coated with anti-friction coating to form the anti-friction coating layer (6), **characterised in that** the sliding bearing element is produced according to a method according to one or more of the preceding claims.

## Revendications

1. Procédé de fabrication d'un élément de palier antifriction axial, en particulier d'un heurtequin d'un vilebrequin d'un moteur à combustion interne, comprenant une couche d'appui, en particulier en acier, et une couche métallique de palier en bronze, laiton ou alliage d'aluminium appliquée sur ladite couche d'appui, et une couche de vernis antifriction (6) à base de polymère appliquée sur ladite couche métallique de palier, éventuellement avec des matières de remplissage améliorant les propriétés tribologiques, dans lequel un matériau composite comprenant la couche d'appui et la couche métallique de palier est fourni sous forme de matériau plat métallique, et dans lequel une section formant ébauche (3) correspondant à la géométrie du palier antifriction axial à fabriquer est estampée dans ledit matériau plat, et dans lequel ladite section formant ébauche (3) est enduite de vernis antifriction afin de former la couche de vernis antifriction (6), **caractérisé en ce que** le vernis antifriction est appliqué sur la section formant ébauche (3) grâce à un procédé d'impression par rouleau à l'aide d'un rouleau applicateur (14) roulant contre la section formant ébauche (3), et **en ce qu'**un rouleau doseur (12) est roulé contre le rouleau applicateur (14) et le vernis antifriction est introduit dans l'espacement ainsi formé afin d'appliquer le vernis antifriction sur le rouleau applicateur (14), et **en ce que**, lors du roulage du rouleur applicateur (14) contre la section formant ébauche (3), une enduction de la section formant ébauche est obtenue jusqu'à des bords (26, 28) avant et arrière par rapport à la direction de roulage et jusqu'aux deux bords latéraux de la section formant ébauche (4).

2. Procédé selon la revendication 1, **caractérisé en ce que** le rouleau applicateur (14) est fourni fixe mais de manière à pouvoir être entraîné en rotation, et **en ce que** la section formant ébauche (3) est guidée au moyen d'un dispositif de transport et d'alimentation (20) de manière à pouvoir se déplacer en translation et tangentiellement vers et au-delà du rouleau applicateur (14), de sorte que le rouleau applicateur (14) peut rouler contre la section formant ébauche (4).

3. Procédé selon la revendication 1 ou 2, **caractérisé en ce que** le rouleau applicateur (14) présente une surface en un matériau polymère résistant aux solvants, en particulier résistant à la NEP.

4. Procédé selon l'une quelconque ou plusieurs des revendications précédentes, **caractérisé en ce qu'**une surface du rouleau applicateur (14) présente une rugosité Rz comprise entre 15 et 50 µm, en particulier comprise entre 20 et 40 µm.

5. Procédé selon l'une quelconque ou plusieurs des revendications précédentes, **caractérisé en ce que** le rouleau applicateur (14) présente une surface légèrement flexible, et **en ce que** la surface du rouleau applicateur (14) présente une dureté Shore d'au moins 35, en particulier d'au moins 40, en particulier d'au moins 45 et d'au plus 65, en particulier d'au plus 60, en particulier d'au plus 55.

6. Procédé selon l'une quelconque ou plusieurs des revendications précédentes, **caractérisé en ce que** le diamètre du rouleau applicateur (14) est supérieur au diamètre du rouleau doseur (12).

7. Procédé selon l'une quelconque ou plusieurs des revendications précédentes, **caractérisé en ce que** le diamètre du rouleau applicateur (14) est compris entre 100 et 250 mm, en particulier entre 100 et 200 mm, en particulier entre 100 et 150 mm, et/ou **en ce que** le diamètre du rouleau doseur est compris entre 50 et 150 cm, en particulier entre 80 et 120 mm.

8. Procédé selon l'une quelconque ou plusieurs des revendications précédentes, **caractérisé en ce que** le rouleau doseur (12) présente une surface en métal, en particulier en acier poli.

9. Procédé selon l'une quelconque ou plusieurs des revendications précédentes, **caractérisé en ce que** le diamètre du rouleau applicateur (14) est compris entre 1,5 et 4,0 fois, en particulier entre 2,0 et 3,0 fois la plus grande dimension de la section formant ébauche (3) à enduire.

10. Procédé selon l'une quelconque ou plusieurs des revendications précédentes, **caractérisé en ce que** le vernis antifriction est appliqué au sein de deux agencements (10, 10') successifs, constitués respectivement d'un rouleau doseur (12) et d'un rouleau applicateur (14).

11. Procédé selon la revendication 9, **caractérisé en ce que** le rouleau applicateur (14) du second agencement (10') successif constitué d'un rouleau doseur (12) et d'un rouleau applicateur (14) est entraîné à une vitesse périphérique qui est inférieure à une vitesse de transport de la section formant ébauche (3).

12. Procédé selon les revendications 9 et 10, **caractérisé en ce que** le rouleau applicateur (14) du premier agencement (10) constitué du rouleau doseur (12) et du rouleau applicateur (14) est entraîné à une vitesse périphérique qui correspond à la vitesse de transport de la section formant ébauche (3), de sorte qu'il roule contre ladite section formant ébauche sans glisser, et **en ce que** le rouleau applicateur (14) du second agencement (10') successif constitué du rouleau doseur (12) et du rouleau applicateur (14) est entraîné à une vitesse périphérique qui est inférieure à la vitesse périphérique du rouleau applicateur (14) du premier agencement (10) et inférieure à la vitesse de transport de la section formant ébauche (4), de sorte qu'une fonction de raclage est assurée par le rouleau applicateur (14) du second agencement (10').

13. Procédé selon les revendications 9, 10 et 11, **caractérisé en ce que** le rouleau applicateur (14) du second agencement (10') est entraîné à une vitesse périphérique comprise entre 0,25 et 0,8 fois, en particulier entre 0,3 et 0,5 fois la vitesse de transport de la section formant ébauche (3).

14. Procédé selon l'une quelconque ou plusieurs des revendications précédentes, **caractérisé en ce qu'**une épaisseur d'enduction de vernis antifriction, atteignant au moins 90 % d'une épaisseur de couche nominale dans une région de bord de 1 mm de manière orthogonale par rapport à la direction de roulage et dans la direction de roulage et à l'opposé de la direction de roulage, est obtenue en partant des bords de la section formant ébauche (4).

15. Elément de palier antifriction axial, en particulier heurtequin d'un vilebrequin d'un moteur à combustion interne, comprenant une couche d'appui (4), en particulier en acier, et une couche métallique de palier (5) en bronze, laiton ou alliage d'aluminium appliquée sur ladite couche d'appui, et une couche de vernis antifriction (6) à base de polymère appliquée sur ladite couche métallique de palier, éventuellement avec des matières de remplissage améliorant les propriétés tribologiques, dans lequel un matériau composite comprenant la couche d'appui (4) et la couche métallique de palier (5) est fourni sous forme de matériau plat métallique, et dans lequel une section formant ébauche (3) correspondant à la géométrie du palier antifriction axial à fabriquer est estampée dans ledit matériau plat, et dans lequel ladite section formant ébauche est enduite de vernis antifriction afin de former la couche de vernis antifriction (6), **caractérisé en ce que** l'élément de palier antifriction est fabriqué conformément à un procédé selon l'une quelconque ou plusieurs des revendications précédentes.
